# FASCICULE DE BREVET EUROPEEN

(11) **EP 0 687 834 B1**
(45) Date de publication et mention de la délivrance du brevet: **16.07.1997**
(21) Numéro de dépôt: 95401373.6
(22) Date de dépôt: 13.06.1995
(51) Int. Cl.: F16H 7/00, F16H 35/08, F41A 9/50

(54) **Dispositif de transmission comportant un tendeur piloté**
Getriebe mit einer gesteuerten Spannvorrichtung
Transmission device with a controlled tensioner

(30) Priorité: 16.06.1994 FR 9407354
(43) Date de publication de la demande: 20.12.1995
(73) Titulaire: CTA International, F-78000 Versailles (FR)
(72) Inventeur: Simon, Georges, F-18390 St Germain du Puy (FR); Mornay, Emmanuel, F-18000 Bourges (FR)
(74) Mandataire: Célanie, Christian

(56) Documents cités:
- EP-A- 0 571 265
- CH-A- 601 697
- GB-A- 2 206 175

## Description

La présente invention a pour objet un dispositif de transmission comprenant une roue centrale mobile en rotation autour d'un premier axe qui est fixe et une roue satellite mobile en rotation autour d'un deuxième axe qui est lui-même susceptible de se déplacer selon une trajectoire donnée par rapport au premier axe sans que la roue satellite n'effectue de rotation autour du deuxième axe, la roue centrale et la roue satellite étant reliées par un élément d'entraînement formant une boucle fermée pour entraîner en rotation mutuelle la roue centrale et la roue satellite.

Un tel dispositif de transmission peut être en particulier mis en oeuvre dans un convoyeur à munitions dans lequel la roue satellite est un pignon de commande lié au masque de l'arme et dans lequel la roue centrale est un pignon de commande du mouvement des munitions dans le convoyeur, la roue centrale et la roue satellite étant entraînées par une chaîne.

Une rotation θ₁ de l'arme en site, et donc du pignon satellite lié au masque, entraîne une rotation θ₂ similaire du pignon central qui commande le mouvement des munitions dans le convoyeur, en raison du fait que le pignon satellite n'effectue pas de rotation sur lui-même lors d'une rotation en site de l'arme.

Cette rotation induite θ₂ nuit au bon fonctionnement de l'arme et sa compensation au moins partielle ou son annulation constitue le problème à résoudre.

L'idée de base de l'invention consiste à compenser au moins partiellement cette rotation induite par une contre-rotation obtenue en faisant varier la longueur relative des bras de l'élément d'entraînement, par exemple une chaîne, entre la roue centrale et la roue satellite.

Le dispositif de transmission selon l'invention est dans ce but caractérisé en ce qu'il comporte un tendeur piloté exerçant une force de tension sur respectivement un premier et un deuxième brin de l'élément d'entraînement qui relie la roue centrale et la roue satellite et présentant un moyen de commande agissant sur la longueur du premier brin en fonction du déplacement de la roue satellite pour compenser au moins partiellement, par contre-rotation, la rotation de la roue centrale induite par ledit déplacement de la roue satellite.

Le moyen de commande comporte avantageusement un élément de liaison présentant d'une part un premier élément d'articulation permettant sa rotation autour d'un troisième axe qui est fixe et qui est parallèle au premier axe, et d'autre part, un premier bras reliant le premier élément d'articulation à la première roue tendeuse ainsi qu'un deuxième bras reliant le premier élément d'articulation à un pion guidé par un élément de came ayant un profil permettant, en modifiant la position de la première roue tendeuse, de modifier la longueur du premier brin.

L'élément d'entraînement peut être une chaîne ou une courroie crantée et la roue centrale, la roue satellite ainsi que la première et la deuxième roues tendeuses sont alors des pignons.

Il est avantageux que la première et la deuxième roues tendeuses soient reliées par un ressort qui tend à les écarter l'une de l'autre pour tendre à la fois le premier et le deuxième brin.

Le dispositif peut alors comporter un troisième bras présentant à une première extrémité un deuxième élément d'articulation coaxial au premier élément d'articulation pour permettre au troisième bras une rotation autour du troisième axe, indépendamment de la rotation de l'élément de liaison, la deuxième roue tendeuse étant montée à une deuxième extrémité du troisième bras.

L'élément de came est de préférence une rainure dont le profil peut être en première approximation un arc de cercle.

L'invention concerne également un système de pointage d'arme caractérisé en ce qu'il comporte un dispositif de transmission tel que défini ci-dessus et en ce que la roue centrale est une roue de commande du mouvement des munitions de l'arme et en ce que la roue satellite est une roue de commande liée au masque de pointage en site de l'arme, la trajectoire donnée correspondant aux pointages possibles de l'arme en site.

L'invention sera mieux comprise à la lecture de la description qui va suivre, donnée à titre d'exemple non limitatif, en liaison avec les dessins dans lesquels :
- les figures 1a à 1c représentent un dispositif de pointage d'arme en site, selon différents angles de pointage en site ;
- la figure 2 est un schéma destiné à expliquer le problème posé dans le dispositif des figures 1A à 1C ;
- la figure 3a, 3b et 4 sont des schémas explicatifs du fonctionnement d'un dispositif selon un mode de réalisation préféré de l'invention ;
- la figure 5 est un schéma illustrant la construction géométrique du profil de l'élément de came ;
- la figure 6 représente un tendeur piloté selon l'invention ainsi que ses coupes partielles suivant A-A, B-B, D-D et C-C ;
- la figure 7a représente une coupe verticale du masque de pointage d'une arme avec enlèvement du tendeur piloté selon l'invention, et
- la figure 7b une vue de dessus du même masque sur lequel le tendeur piloté selon un mode de réalisation préféré de l'invention a été monté.

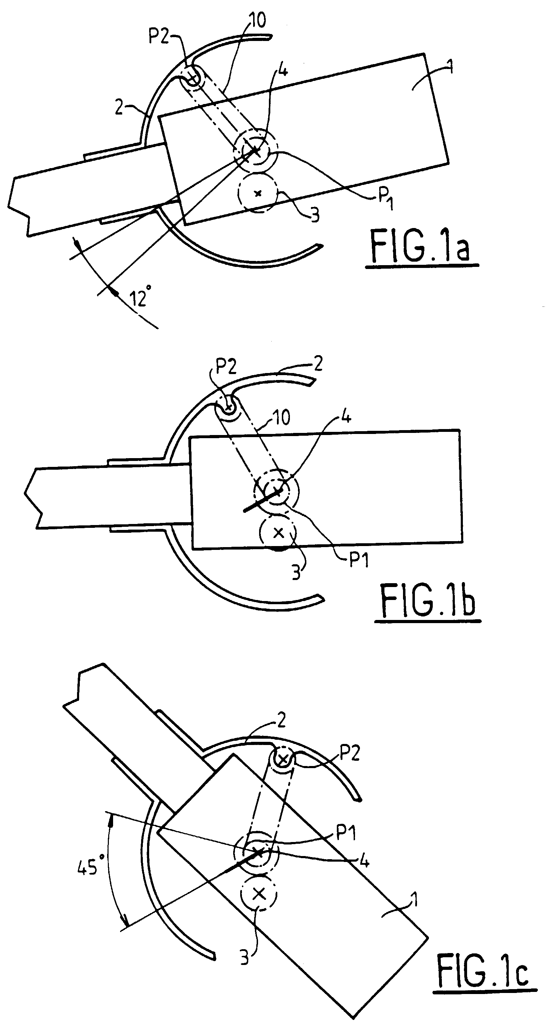

Selon les figures 1a à 1c, une arme 1 présentant un masque 2 peut être pointée suivant différents angles de site, par exemple -12° à la figure 1A, 0° à la figure 1B et +45° à la figure 1C. Le masque 2 présente un pignon P2 dit pignon satellite dont la fonction est de commander un convoyeur de munitions. A cet effet, le pignon de commande P2 entraîne le pignon central P1 dont l'axe est l'axe de rotation en site de l'arme et le pignon P1 et le pignon P2 sont reliés par une chaîne fermée 10. La rotation du pignon de commande P2 entraîne celle du pignon P1 qui, à son tour, entraîne celle d'un mécanisme 3 entraînant le convoyeur de munitions.

Une rotation θ₁ de l'arme 1 en site, et donc du pignon de commande P2 lié au masque, entraîne une rotation θ₂ similaire du pignon P1 de commande du mouvement des munitions dans le convoyeur car, lors d'une rotation en site de l'arme 1, le pignon P2 n'effectue pas de rotation sur lui-même. En effet, ce n'est que lors d'un tir, que le pignon P2 est entraîné en rotation et entraîne à son tour le convoyeur de munitions par l'intermédiaire du pignon P1 et du mécanisme 3.

Cette rotation induite θ₂ nuit au bon fonctionnement de l'arme 1 étant donné que la rotation en site de l'arme 1 entraîne un fonctionnement parasite non souhaité du convoyeur de munitions.

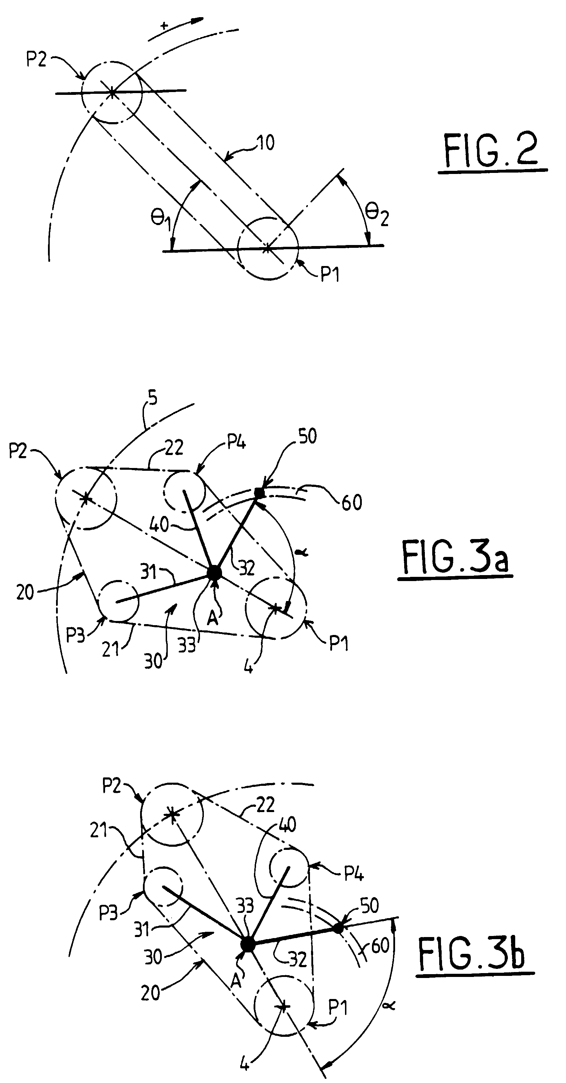

Le problème peut s'expliciter de la manière suivante (voir la figure 2) :

Soient deux pignons dentés P1 et P2 reliés par une chaîne 10, le pignon ayant une position fixe mais pouvant tourner sur lui-même, le pignon P2 tournant autour de P1 (θ) sans pouvoir tourner sur lui-même.

Cette rotation θ₁ entraîne une rotation θ₂ du pignon sur lui-même avec θ₁ = θ₂ dans la configuration définie dans la figure 2.

C'est donc cet angle θ₂ qu'il convient de compenser au moins partiellement ou d'annuler.

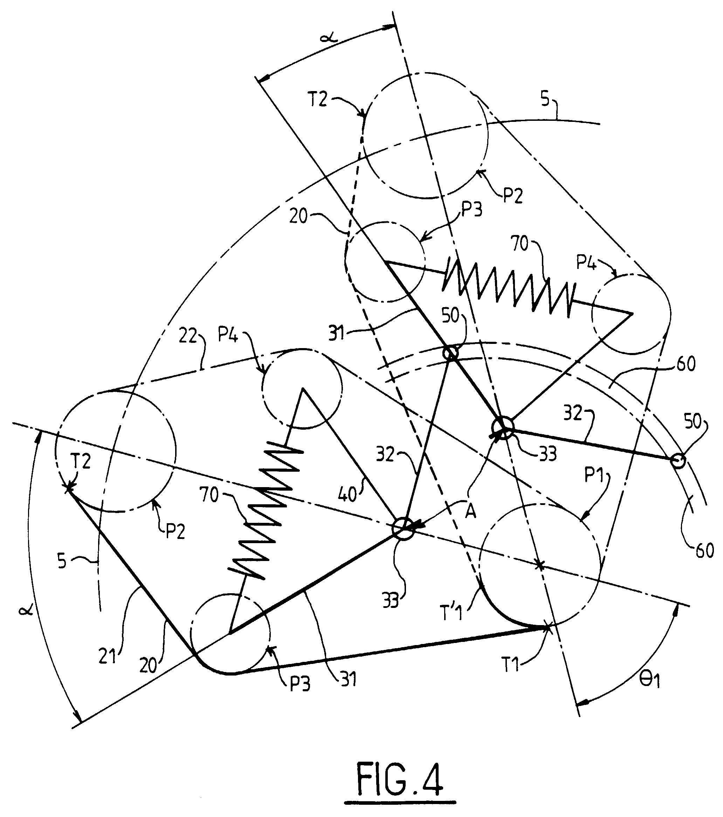

Les figures 3a, 3b et 4 représentent un tendeur piloté selon l'invention. Le tendeur piloté comporte deux pignons tendeurs P3 et P4, le pignon P3 étant destiné à tendre le brin 21 de la chaîne 20 entre les pignons P1 et P2 et le pignon P4 étant destiné à tendre le brin 22 entre les pignons P1 et P2. Le pignon P3 est mobile en rotation autour d'un point A, cette rotation étant commandée par un pion 50 guidé par une came 60.

A cet effet, un élément de liaison 30 lie rigidement le pion 50 et le pignon P3 qui contient l'articulation 33 qui, en A, permet la fixation du tendeur piloté. L'élément de liaison 30 peut tourner librement autour de cette fixation. Un bras 31 de l'élément de liaison 30 relie l'articulation 33 et le pignon P3. Un bras 32 de l'élément de liaison 30 relie l'articulation 33 au pion 50.

Un bras 40, articulé en A sur l'élément de fixation qui relie le pignon P3 et le pion 50, porte à une extrémité le pignon P4. Cette liaison articulée permet au pignon P4 de tourner autour de l'articulation 33 et un ressort 70 représenté à la figure 4 permet d'écarter l'un de l'autre les pignons P3 et P4 de manière à obtenir une tension sensiblement constante de la chaîne 20.

Le tendeur piloté, comportant l'élément de liaison 30, le bras 40 et les pignons P3 et P4, est fixé sur un élément de liaison liant rigidement les pignons P1 et P2, cette fixation permettant la libre rotation du tendeur piloté autour du point A. On notera que le point A peut être situé en dehors de la ligne reliant les axes de rotation des pignons P1 et P2.

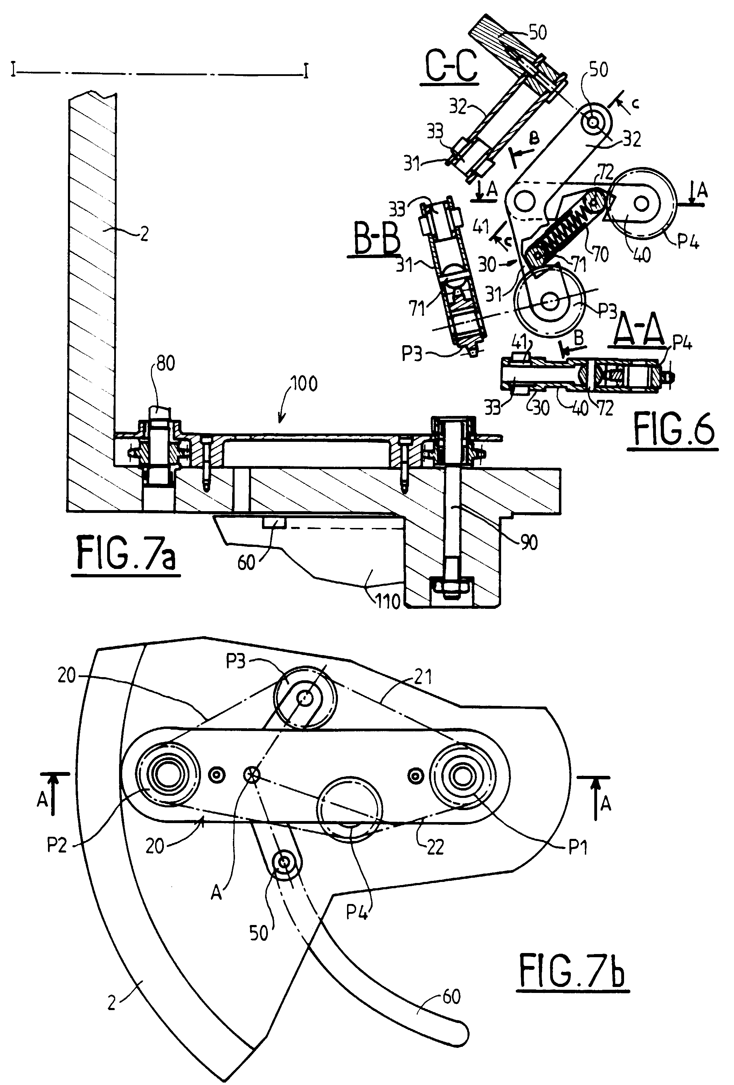

La rainure 60 faisant office de came intérieure et extérieure dans laquelle se déplace le pion 50 est disposée sur une partie fixe 110 (voir figure 7a) ne tournant pas avec le pignon P2. La position du doigt 50 définit l'angle α (voir fig. 4) existant entre le tendeur et l'axe reliant les pignons P1 et P2 et par conséquent la position du pignon P3. La position du pignon P4 est une résultante de la position du pignon P3 et de la longueur totale de la chaîne.

La position du pignon P3 influe sur la longueur du brin 21 reliant les pignons P1, P3, P2 entre les points T1 et T2 définis en traits pleins dans la figure 4 et corrélativement sur celle du brin 22 reliant les pignons P1, P4, P2. Pour une position en site donnée (en pointillés), le pignon P2 ne tournant pas sur lui-même, la variation de la longueur du brin 21 reliant dans cette position les pignons P1, P3, P2 entre les points T'1 et T2, se traduit par une rotation du pignon P1 sur lui-même induisant une contre-rotation θ'₂ du pignon P1 qui permet d'annuler la rotation θ₂ précitée.

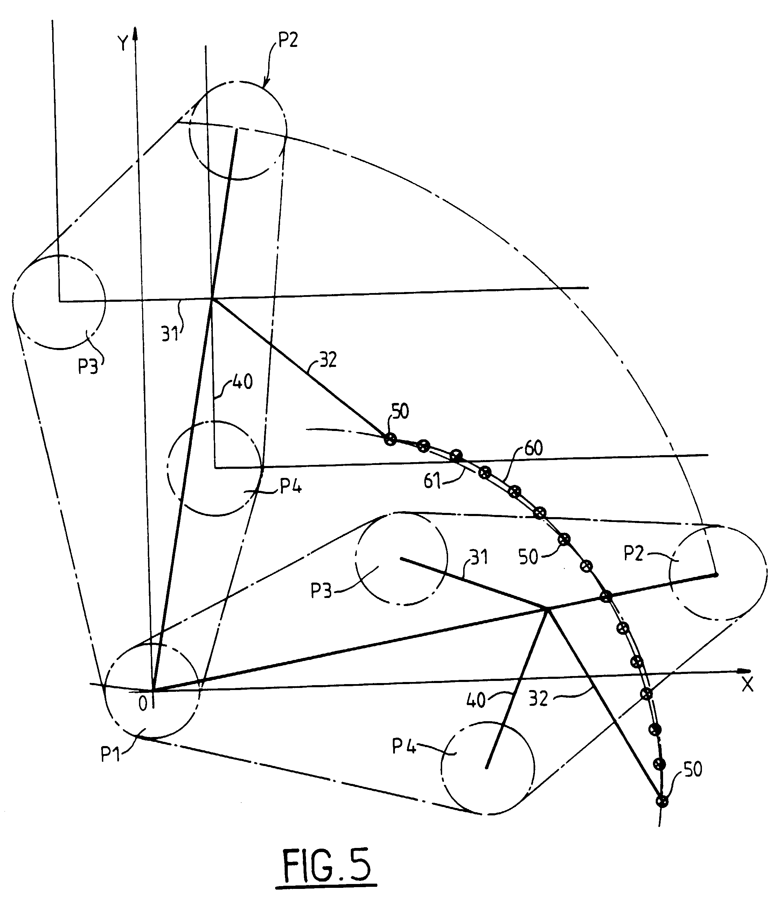

La figure 5 représente un exemple de construction du profil de la came 60. Il s'agit de déterminer un certain nombre de points pour lesquels la compensation est obtenue. Le profil de la came 60 est très voisin d'un arc de cercle, ce qui fait qu'une compensation approximative peut être obtenue avec une came 70 formant un arc de cercle.

Le tendeur piloté selon l'invention présente ainsi deux fonctions :
1) pour une position en site donnée, il permet une transmission de puissance par le mouvement de la chaîne 20, c'est-à-dire qu'une rotation du pignon P2 sur lui-même entraîne une rotation sur lui-même du pignon P1, d'où l'entraînement du convoyeur à munitions ;
2) en l'absence de rotation du pignon P2 sur lui-même, c'est-à-dire sans transmission de puissance par la chaîne 20, il permet un mouvement en site de l'arme sans rotation θ₂ du pignon P1 sur lui-même.

Les figures 4 et 5 montrent plus précisément la cinématique des placements en site. Lorsque le pion 50 se déplace dans la rainure 60, une rotation θ₁ du pignon P2 autour de P1 entraîne une première rotation θ₂ du pignon P1 sur lui-même. Or, la rotation θ₁ du pignon P2 autour de P1 entraîne aussi une progression du pion 50 dans la rainure 60 qui commande l'angle α (voir figure 4) entre le tendeur piloté et l'axe reliant les axes de rotation des pignons P1 et P2, d'où variation de la longueur du brin 21 reliant les pignons P1, P3, P2 entre les points T1 et T2. La variation induite de la longueur du brin 21 se traduit par une deuxième rotation θ'₂ en sens inverse du pignon P1 sur lui-même d'où résulte une annulation de la rotation du pignon P1. Donc, la rotation θ₁ en site entraîne une rotation α du tendeur piloté.

Le profil de la came 60 permet grâce au pivotement α du tendeur de conserver une longueur de chaîne 20 constante entre les points T1 et T2 quelle que soit la position du pignon P2, la longueur du brin 21 diminuant de la longueur de l'arc de cercle T1T'1 (figure 4). Ceci correspond à l'annulation réciproque des deux rotations θ₂ et θ'₂, d'où une rotation résultante du pignon P1 sur lui-même qui est nulle lors d'un mouvement en site de l'arme 1.

Ce dispositif qui fonctionne de manière totalement mécanique et automatique, simplement par la mise en oeuvre du tendeur piloté décrit ci-dessus se prête à une réalisation simple et fiable.

En se reportant maintenant aux figures 6, 7a et 7b, on voit que le tendeur piloté est monté sur une platine 100 portée par le masque 2, le repère 80 désignant l'arbre d'entrée commandant la rotation du pignon P2, et le repère 90 représentant l'axe de pivotement du pignon P1.

Le ressort 70 est monté entre deux points d'accrochage 71 et 72 situés approximativement à mi-longueur des bras 31 et 40. La coupe A-A de la figure 6 montre également que le bras 40 qui porte le pignon P4 est articulé en 41 à l'intérieur de l'articulation 33 de l'élément de liaison 30.

L'invention ne se limite pas aux modes de réalisations décrits et représentés.

En particulier, le déplacement du pignon P4 peut être obtenu par un guidage en translation, par exemple selon l'axe des pignons P3 et P4 à la place de la liaison par rotule existant autour de A, un ressort écartant entre eux les pignons P3 et P4 et permettant toujours d'obtenir une tension permanente de la chaîne 20.

Le mouvement du pignon P2 n'est pas nécessairement une portion de cercle, il peut être également une courbe proche d'une portion de cercle ou tout autre courbe dans la mesure où il est toujours possible, en choisissant convenablement le profil de la came 60, de réaliser une compensation au moins partielle de la rotation du pignon P1.

Il va de soi en particulier en condition de rotation nulle du pignon P1 peut être remplacée par une autre condition de rotation imposée qui peut être liée ou non aux autres mouvements, ceci afin d'obtenir une fonction particulière.

Il est possible en pratique de déterminer par le calcul le profil de la came 60, ou bien, empiriquement, en pointant un certain nombre de positions caractéristiques du pion 50 obtenues en positionnant manuellement le tendeur piloté dans des positions correspondant à l'obtention de la compensation angulaire recherchée.

## Revendications

1. Dispositif de transmission comprenant une roue centrale mobile en rotation autour d'un premier axe qui est fixe et une roue satellite mobile en rotation autour d'un deuxième axe qui est lui-même susceptible de se déplacer selon une trajectoire donnée par rapport au premier axe sans que la roue satellite n'effectue de rotation autour du deuxième axe, la roue centrale et la roue satellite étant reliées par un élément d'entraînement formant une boucle fermée pour entraîner en rotation mutuelle la roue centrale et la roue satellite, caractérisé en ce qu'il comporte un tendeur piloté exerçant une force de tension sur respectivement un premier (21) et un deuxième (22) brin de l'élément d'entraînement (20) qui relient la roue centrale (P1) et la roue satellite (P2) et présentant un moyen de commande agissant sur la longueur du premier (21) brin en fonction du déplacement (θ₁) de la roue satellite (P2) pour compenser au moins partiellement par contre-rotation la rotation (θ₂) de la roue centrale (P1) induite par ledit déplacement (θ₁) de la roue satellite (P2).

2. Dispositif selon la revendication 1 caractérisé en ce que le tendeur piloté comporte une première (T3) et une deuxième (T4) roues tendeuses rappelées par ressort ainsi qu'un élément de liaison (30) présentant d'une part un premier élément d'articulation (33) permettant sa rotation autour d'un troisième axe qui est fixe et qui est parallèle au premier axe, et d'autre part un premier bras (31) reliant le premier élément d'articulation (33) à la première roue tendeuse (P3) ainsi qu'un deuxième bras (32) reliant le premier élément d'articulation (33) à un pion (50) guidé par un élément de came (60) ayant un profil permettant, en modifiant la position de la première roue tendeuse (T3), de modifier la longueur du premier brin (21).

3. Dispositif selon la revendication 2 caractérisé en ce que l'élément d'entraînement (20) est une chaîne ou une courroie crantée et en ce que la roue centrale (P1), la roue satellite (P2), ainsi que la première (P3) et la deuxième (P4) roues tendeuses sont des pignons.

4. Dispositif selon l'une des revendications 2 ou 3 caractérisé en ce que la première (P3) et la deuxième (P4) roues tendeuses sont reliées par un ressort (70) qui tend à les écarter l'une de l'autre pour tendre à la fois le premier (21) et le deuxième brin (22).

5. Dispositif selon la revendication 4 caractérisé en ce qu'il comporte un troisième bras (40) présentant à une première extrémité un deuxième élément d'articulation (41) coaxial au premier élément d'articulation (33) pour permettre au troisième bras (40) une rotation autour d'un troisième axe, indépendamment de la rotation de l'élément de liaison (30), la deuxième roue tendeuse (P4) étant montée à une deuxième extrémité du troisième bras (40).

6. Dispositif selon l'une des revendications 2 à 5 caractérisé en ce que l'élément de came est une rainure (60).

7. Dispositif selon l'une des revendications 2 à 6 caractérisé en ce que le profil de l'élément de came (60) est un arc de cercle.

8. Dispositif selon l'une des revendications 2 à 7 caractérisé en ce que la trajectoire donnée du deuxième axe est un arc de cercle ou un cercle.

9. Dispositif selon l'une des revendications précédentes caractérisé en ce que le premier, le deuxième et le troisième axes sont parallèles et coplanaires.

10. Système de pointage d'arme caractérisé en ce qu'il comporte un dispositif de transmission selon l'une des revendications précédentes et en ce que la roue centrale (P1) est une roue de commande du mouvement des munitions de l'arme et en ce que la roue satellite (P2) est une roue de commande liée au masque (2) de pointage en site de l'arme, la trajectoire donnée correspondant aux pointages possibles de l'arme en site.

## Patentansprüche

1. Getriebe mit einem in Drehung um eine erste stationäre Achse beweglichen Zentralrad und einem in Drehung um eine zweite Achse beweglichen Satellitenrad, wobei sich die Achse selbst entlang einer Bahn verschieben kann, die in bezug auf die erste Achse gegeben ist, ohne daß das Satellitenrad eine Drehung um die zweite Achse durchführt, wobei das Zentralrad und das Satellitenrad durch ein Antriebselement verbunden sind, das eine geschlossene Schleife bildet, um das Zentralrad und das Satellitenrad in gegenseitiger Drehung anzutreiben, gekennzeichnet dadurch, daß sie eine gesteuerte Spannvorrichtung enthält, die eine Spannkraft auf jeweils ein erstes (21) und ein zweites (22) Trum des Antriebselements (20), das das Zentralrad (P1) und das Satellitenrad (P2) verbindet, ausübt, und ein Mittel zum Steuern aufweist, das auf die Länge des ersten (21) Trums je nach Verschub (θ₁) des Satellitenrads (P2) einwirkt, um mindestens teilweise durch Gegendrehung die Drehung (θ₂) des Zentralrads (P1) auszugleichen, die von besagter Verschiebung (θ₁) des Satellitenrads (P2) induziert wird.

2. Vorrichtung gemäß dem Anspruch 1, gekennzeichnet dadurch, daß die gesteuerte Spannvorrichtung ein erstes (T3) und ein zweites (T4) Spannrad umfaßt, die durch eine Feder zurückgeholt werden, sowie ein Verbindungselement (30), das einerseits ein erstes Gelenkelement (33) aufweist, das eine Drehung um eine dritte Achse erlaubt, die stationär ist, und parallel zur ersten Achse liegt, und, andererseits, einen zweiten Arm (31), der das erste Gelenkelement (33) mit dem ersten Spannrad (P3) verbindet sowie einen zweiten Arm (32), der das erste Gelenkelement (33) mit einem Klotz (50) verbindet, der von einem Nockenelement (60) geführt wird, das ein Profil hat, das durch Änderung der Position des ersten Spannrads (T3) das Ändern der Länge des ersten Trums (21) ermöglicht.

3. Vorrichtung gemäß dem Anspruch 2, gekennzeichnet dadurch, daß das Antriebselement (20) eine Kette oder ein Zahnriemen ist, und daß das Zentralrad (P1), das Satellitenrad (P2) sowie das erste (P3) und das zweite (P4) Spannrad Ritzel sind.

4. Vorrichtung gemäß einem der Ansprüche 2 oder 3, gekennzeichnet dadurch, daß das erste (P3) und das zweite (P4) Spannrad mit einer Feder (70) verbunden sind, die dazu tendiert, sie auseinanderzuziehen, um gleichzeitig das erste (21) und das zweite (22) Trum zu spannen.

5. Vorrichtung gemäß dem Anspruch 4, gekennzeichnet dadurch, daß sie einen dritten Arm (40) enthält, der an einem Ende ein zweites Gelenkelement (41) koaxial zum ersten Gelenkelement (33) aufweist, um es dem dritten Arm (40) zu ermöglichen, um eine dritte Achse zu drehen, und zwar unabhängig von der Drehung des Verbindungselements (30), während das zweite Spannrad (P4) auf ein zweites Ende des dritten Arms (40) montiert ist.

6. Vorrichtung gemäß einem der Ansprüche 2 bis 5, gekennzeichnet dadurch, daß das Nockenelement eine Nute ist (60).

7. Vorrichtung gemäß einem der Ansprüche 2 bis 6, gekennzeichnet dadurch, daß das Profil des Nockenelements (60) ein Kreisbogen ist.

8. Vorrichtung gemäß einem der Ansprüche 2 bis 7, gekennzeichnet dadurch, daß die Bahn, die der zweiten Achse verliehen wird, ein Kreisbogen oder ein Kreis ist.

9. Vorrichtung gemäß einem der vorhergehenden Ansprüche, gekennzeichnet dadurch, daß die erste, die zweite und die dritte Achse parallel und koplanar sind.

10. Zielsystem liner Waffe, gekennzeichnet dadurch, daß es ein Getriebe gemäß einem der vorhergehenden Ansprüche aufweist, und dadurch, daß das Zentralrad (P1) ein Rad zum Steuern der Bewegung der Munitionen der Waffe ist, und dadurch, daß das Satellitenrad (P2) ein Steuerrad ist, das mit der Maske (2) zum Zielen am Ort der Waffe verbunden ist, wobei die verliehene Bahn den möglichen Zielstellungen der Waffe im Gelände entspricht.

## Claims

1. A transmission device comprising a center wheel able to rotate around a first fixed axis and a planet wheel able to rotate around a second axis the latter being able to move along a given trajectory with respect to the first axis without the planet wheel rotating around the second axis, the center wheel and the planet wheel being linked by a drive element forming a closed loop to mutually rotate the center wheel and the planet wheel, characterized in that it comprises a controlled tensioner which exerts a tension force respectively on a first (21) and second (22) link of the drive element (20) which connects the center wheel (P1) and the planet wheel (P2) and which has a control means acting on the length of the first link (21) as a function of the displacement (θ₁) of the planet wheel (P2) in order to offset, at least partially, by counter-rotation, the rotation (θ₂) of the center wheel (P1) induced by said displacement (θ₁) of the planet wheel (P2).

2. A device according to Claim 1, characterized in that the controlled tensioner incorporates a first (P3) and second (P4) tension wheel, spring-returned, as well as a linking element (30) having a first hinged element (33) enabling it to rotate about a third fixed axis parallel to the first axis, and additionally a first bracket (31) connecting the first hinged element (33) to the first tension wheel (P3) as well as a second bracket (32) connecting the first hinged element (33) to a pin (50) guided by a cam element (60) which has a profile which, by modifying the position of the first tension wheel (P3), allows the length of the first link (21) to be modified.

3. A device according to Claim 2, characterized in that the drive element (20) is a chain or a synchronous belt and in that the center wheel (P1), the planet wheel (P2) as well as the first (P3) and second (P4) tension wheels are pinions.

4. A device according to one of Claims 2 or 3, characterized in that the first (P3) and second (P4) tension wheels are connected together by a spring (70) which tends to distance them from one another in order to tense both the first (21) and second (22) link.

5. A device according to Claim 4, characterized in that it incorporates a third bracket (40) having, at a first end, a second hinged element (41) coaxial to the first hinged element (33) to enable the third bracket (40) to rotate around the third axis, independently of the rotation of the linking element (30), the second tension wheel (P4) being mounted on a second end of the third bracket (40).

6. A device according to one of Claims 2 to 5, characterized in that the cam element is formed of a groove (60).

7. A device according to one of Claims 2 to 6, characterized in that the profile of the cam element (60) is an arc of a circle.

8. A device according to one of Claims 2 to 7, characterized in that the given trajectory of the second axis is an arc of a circle or a circle.

9. A device according to one of the above Claims, characterized in that the first, the second and the third axes are parallels and coplanar.

10. A laying system for a weapon, characterized in that it comprises a transmission device according to one of the above Claims and in that the center wheel (P1) is a drive wheel which controls the movement of the weapon's ammunition and in that the planet wheel (P2) is a drive wheel connected to the elevation sight mantlet (2) of the weapon, the trajectory given corresponding to the different possible elevation sighting angles of the weapon.
